# EUROPEAN PATENT APPLICATION

(11) **EP 0 987 738 A2**
(43) Date of publication of application: **22.03.2000**
(21) Application number: 99117926.8
(22) Date of filing: 14.09.1999
(51) Int. Cl.: H01J 65/04, H01S 3/038

(54) **High frequency energy supply apparatus and high frequency electrodeless discharge apparatus**

(30) Priority: 16.09.1998 JP 26115498; 30.03.1999 JP 8871399
(71) Applicant: Matsushita Electric Industrial Co., Ltd., Kadoma-shi, Osaka 571-8501 (JP)
(72) Inventor: Hochi, Akira, Narashi, Nara 631-0003 (JP); Takeda, Mamoru, Sorakugun, Kyoto 619-0237 (JP)
(74) Representative: Schwabe - Sandmair - Marx

(57) **Abstract**

A high frequency energy supply apparatus (10) includes a side resonator (12) having a plurality of conductive projections; and suppression means for suppressing generation of abnormal discharge in the vicinity of at least one of end portions of the plurality of conductive projections. A high frequency electrodeless discharge apparatus (70) includes an electrodeless discharge generation section; and a high frequency energy supply apparatus for supplying the electrodeless discharge generation section with a high frequency energy. The high frequency energy supply apparatus (70) includes a side resonator (72) having a plurality of conductive projections; and suppression means for suppressing generation of abnormal discharge in the vicinity of at least one of end portions of the plurality of conductive projections.

## Description

### BACKGROUND OF THE INVENTION

### 1. FIELD OF THE INVENTION:

The present invention relates to a high frequency energy supply apparatus and a high frequency electrodeless discharge apparatus including the high frequency energy supply apparatus.

### 2. DESCRIPTION OF THE RELATED ART:

A high frequency electrodeless discharge lamp has superior advantages over electroded arc discharge lamps in that it is easier to couple an electromagnetic energy to a filling substance, mercury is allowed to be removed from the filling substance, and there is no loss at the electrode, which are expected to realize an improved light emission efficacy. Furthermore, since no electrode is accommodated in a discharge space, an inner wall of a bulb is prevented from being blackened due to vaporization of the material of the electrode, which significantly extends the life of the lamp. Due to these advantageous features, the high frequency electrodeless discharge lamp is a subject of active studies today as a next generation high luminance lamp.

In a general discharge lamp device, a smaller light source, which is closer to a point light source, is more suitable to ideal light distribution design. Accordingly, size reduction in plasma arc as a light source is strongly demanded. For example, in an application for a standard video projector, a plasma arc having a size of about 3 mm or less is required for an optical designing reason for improving the utilization efficiency of light radiation. In an electrodeless discharge lamp, the size of a plasma arc is determined by the inner diameter of the bulb. A conventional high frequency electrodeless discharge lamp device using a cavity resonator is not suitable to be used in a field which requires a high luminance point light source, since the wavelength of the light limits the reduction in the plasma arc. Recently, a high frequency energy supply apparatus, for concentrating a high frequency resonating electromagnetic field within a space smaller than a cavity resonator, has been developed.

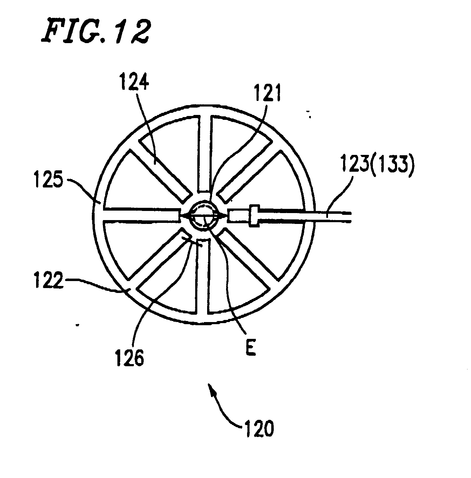

Hereinafter, a conventional high frequency energy supply apparatus **120** disclosed, for example, in Japanese Laid-Open Publication No. 10-189270 will be described. An example of the conventional high frequency energy supply apparatus **120** is shown in Figure **12**.

The high frequency energy supply apparatus **120** includes a plurality of side resonators (i.e., a side resonator group). The side resonator group has an electromagnetic-inducing function section formed of a circular conductive material and an electric capacity function section formed of a cavity. The side resonators are arranged in a circle so that electric capacity function sections are opposed to each other inside the side resonators. The side resonator group supplies a load with a high frequency energy required for discharge, using a resonating high frequency electromagnetic field which is generated at the center of the side resonator group. Due to such a structure, the high frequency electromagnetic field can be concentrated in a space smaller than the conventional cavity resonator. As a result, a high frequency energy can be supplied to a space smaller than the conventional cavity resonator.

Figure **12** shows a structure of a vane type resonator **122** as an example of the side resonator group of the conventional high frequency energy supply apparatus **120**. The vane type resonator **122** includes a cylinder **125** and eight plate-like vanes **124** extending from an inner circumferential surface of the cylinder **125** toward the center of the cylinder **125**. The cylinder **125** and the vanes **124** are formed of a conductive material.

An inner circumferential surface of the cylinder **125**, opposing surfaces of two neighboring vanes **124** and a space surrounded by the surfaces act as an electromagnetic-inducing function section. Every two neighboring vanes **124** and a gap therebetween act as an electric capacity function section.

A high frequency energy propagating from a high frequency oscillator (not shown) is coupled to the vane type resonator **122** through a coupling antenna **133** acting as an electric field coupling high frequency coupler **123**. The coupling antenna **133** is electrically connected to one of the sight vanes **124** by caulking or welding. The vane type resonator **122** is designed so as to resonate at a frequency of the high frequency energy which is coupled. By use of a resonating high frequency electric field **E** generated in a central portion of the vane type resonator **122**, a required amount of high frequency energy is supplied to a load such as, for example, an electrodeless discharge lamp located in the central portion of the vane type resonator **122**.

It is assumed that the number of side resonators included in the vane type resonator **122** is N, and the vane type resonator **122** is designed to be driven in a mode in which two side resonators are phase-shifted by 2π/N. In this case, the charge of two neighboring vanes **124** are of opposite polarities. A resonating high frequency electric field **E** generated by these charges is oriented in the direction of the diameter of the central portion, and is distributed in a direction crossing a load **121** such as, for example, an electrodeless discharge lamp. When the vane type resonator **122** is operated in the 2π/N mode, a strongest electric field is obtained in the central portion accommodating the load **121** such as the electrodeless discharge lamp.

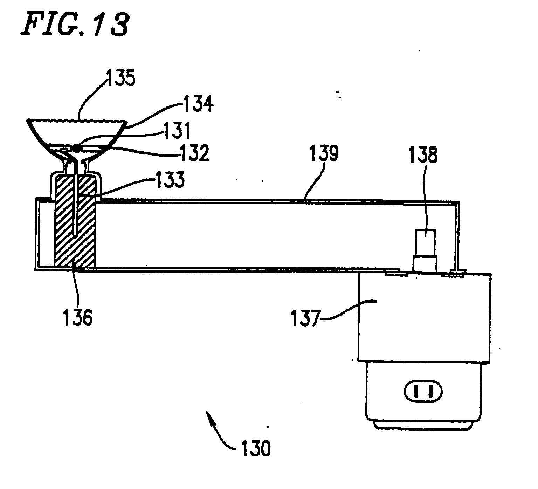

Figure **13** shows a structure of a conventional high frequency electrodeless discharge lamp device **130** having a side resonator group **132**. The side resonator group **132** is, for example, the vane type resonator **122** shown in Figure **12**.

An electrodeless discharge lamp **131** is formed of a spherical quartz glass filled with an ionizable medium for performing discharge emission at a high frequency. The electrodeless discharge lamp **131** is supported in a central portion of the side resonator group **132** by a support rod formed of quartz glass.

Reference numeral **139** represents a high frequency waveguide formed of a metal conductive material, and reference numeral **137** represents a magnetron for exciting the high frequency. An oscillation antenna **138** is provided in the high frequency waveguide **139**. Each of the elements of the side resonator group **132** is sized so that the frequency of the high frequency energy oscillated by the oscillation antenna **138** matches the resonating frequency of the side resonator group **132**.

A high frequency energy is excited inside the high frequency waveguide **139** by application of a high voltage to the magnetron **137** by a high voltage supply. The high frequency energy which is propagated is coupled to the side resonator group **132** through the coupling antenna **133**. The coupling antenna **133** is fixed to an appropriate position by a coupling antenna supporting section **136** formed of a dielectric material.

The electrodeless discharge lamp **131** causes discharge and thus emits light by a resonating high frequency electromagnetic field generated in the central portion of the side resonator group **132**. The light radiating by discharge is reflected by a reflecting mirror **134** formed of a conductive material and is removed outside via a metal mesh **135**. The reflecting mirror **134** and the metal mesh **135** act as a measure for preventing high frequency leaks.

The high frequency energy supply apparatus described in Japanese Laid-Open Publication No. 10-189270 allows the plasma arc having a relatively small size of 10 mm or less to be discharged, which is maintained for a certain period of time.

The present inventors have found the following regarding the conventional high frequency energy supply apparatus **120**: when energy supply to a load such as the electrodeless lamp cannot be performed with satisfactory matching, arcing is caused by corona discharge from an end portion of a conductive projection (for example, vane **124**) of the side resonator group (for example, vane type resonator **122**) toward the atmosphere in the side resonator group, due to a strongly concentrated resonating electric field. In Figure **12**, such arcing generated at an end portion of one of the vanes **124** by corona discharge is schematically represented by, for example, reference numeral **126**.

When such corona discharge occurs, a large amount of high frequency energy is lost. As a result, a sufficient amount of high frequency energy cannot be supplied to the load. Moreover, corona discharge continued for an extended period of time in the atmosphere in the side resonator group may undesirably melt and thus break glass of the electrodeless discharge lamp, a high frequency shield or even the side resonator group itself.

Japanese Laid-Open Publication No. 10-189270 does not refer to generation of arcing caused by corona-discharge or the above-mentioned problems of the conventional high frequency energy supply apparatus **120**.

### SUMMARY OF THE INVENTION

According to one aspect of the invention, a high frequency energy supply apparatus includes a side resonator having a plurality of conductive projections; and suppression means for suppressing generation of abnormal discharge in the vicinity of at least one of end portions of the plurality of conductive projections.

In one embodiment of the invention, the at least one of the end portions of the plurality of conductive projections is rounded or chamfered.

In one embodiment of the invention, a pressure in an ambient atmosphere around the at least one of the end portions of the plurality of conductive projections is set to be a pressure which is less likely to cause abnormal discharge than atmospheric pressure.

In one embodiment of the invention, the high frequency energy supply apparatus further includes a dielectric member for covering the at least one of the end portions of the plurality of conductive projections, wherein the dielectric member has a dielectric breakdown strength higher than the dielectric breakdown strength of atmosphere.

In one embodiment of the invention, the side resonator is a vane type resonator.

According to another aspect of the invention, a high frequency electrodeless discharge apparatus includes an electrodeless discharge generation section; and a high frequency energy supply apparatus for supplying the electrodeless discharge generation section with a high frequency energy. The high frequency energy supply apparatus includes a side resonator having a plurality of conductive projections; and suppression means for suppressing generation of abnormal discharge in the vicinity of at least one of end portions of the plurality of conductive projections.

In one embodiment of the invention, the suppression means includes assisting means for assisting the electrodeless discharge generation section in starting discharge with certainty.

According to still another aspect of the invention, a high frequency electrodeless discharge apparatus includes an electrodeless discharge generation section; a high frequency energy supply apparatus for supplying the electrodeless discharge generation section with a high frequency energy; and assisting means for assisting the electrodeless discharge generation section in starting discharge with certainty.

In one embodiment of the invention, the assisting means includes a support member for supporting the electrodeless discharge generation section and accommodating a start assisting electrode; and a start circuit for applying a high voltage pulse to the start assisting electrode.

In one embodiment of the invention, the assisting means includes a support member for supporting the electrodeless discharge generation section and sealing noble gas; a high voltage application electrode connected to the support member; and a start circuit for applying a high voltage pulse to the high voltage application electrode to cause discharge of the noble gas.

Thus, the invention described herein makes possible the advantages of providing a high frequency energy supply apparatus for suppressing generation of corona discharge at an end portion of a conductive projection in a side resonator group and a high frequency electrodeless discharge apparatus including such a high frequency energy supply apparatus.

These and other advantages of the present invention will become apparent to those skilled in the art upon reading and understanding the following detailed description with reference to the accompanying figures.

### BRIEF DESCRIPTION OF THE DRAWINGS

Figure **1** is a diagram illustrating a structure of a high frequency energy supply apparatus **10** in a first example according to the present invention:
Figure **2** is an enlarged view of end portions **21** of vanes **14** of the high frequency energy supply apparatus **10** shown in Figure **1**;
Figure **3** is a diagram illustrating analysis results of distribution of electric field strength in an ambient atmosphere around the end portions of the vanes **124** of a conventional vane type resonator **122**, the analysis being performed using a finite element method;
Figure **4** is a diagram illustrating analysis results of distribution of electric field strength in an ambient atmosphere around the end portions **21** of the vanes **14** of a vane type resonator **12** of the high frequency energy supply apparatus **10** shown in Figure **1**;
Figure **5** is a cross-sectional view of the vanes **14** shown in Figure **2** taken along line **A-A**, illustrating a different manner of rounding the end portions **21**:
Figure **6** is an enlarged view of end portions **21** of the vanes **14** shown in Figure **5**:
Figure **7** is a schematic view illustrating a structure of a high frequency energy supply apparatus **70** in a second example according to the present invention;
Figure **8** is a graph illustrating the correspondence of the product of the pressure of the atmosphere and the distance between electrode with respect to the breakdown voltage;
Figure **9A** is a schematic view illustrating a structure of a high frequency energy supply apparatus **90** in a third example according to the present invention;
Figure **9B** is a cross-sectional view of the high frequency energy supply apparatus **90** in Figure **9A** taken along line **B-B**;
Figure **10** is a cross-sectional view of a high frequency electrodeless discharge lamp apparatus **100** in a fourth example according to the present invention;
Figure **11** is a cross-sectional view of a high frequency electrodeless discharge lamp apparatus **110** in a fifth example according to the present invention; and
Figure **12** is a schematic view illustrating a structure of a vane type resonator **122** as an example of a side resonator group of a conventional high frequency energy supply apparatus **120**: and
Figure **13** is a schematic view illustrating a structure of a conventional high frequency electrodeless lamp apparatus **130**.

### DESCRIPTION OF THE EMBODIMENTS

Hereinafter, the present invention will be described by way of illustrative examples with reference to the accompanying drawings.

In this specification, the term "high frequency refers to an electromagnetic wave having a frequency of about 1 MHz through about 100 GHz. The present invention provides preferable effects in the "microwave" frequency range of about 300 MHz through about 30 GHz.

### (Example 1)

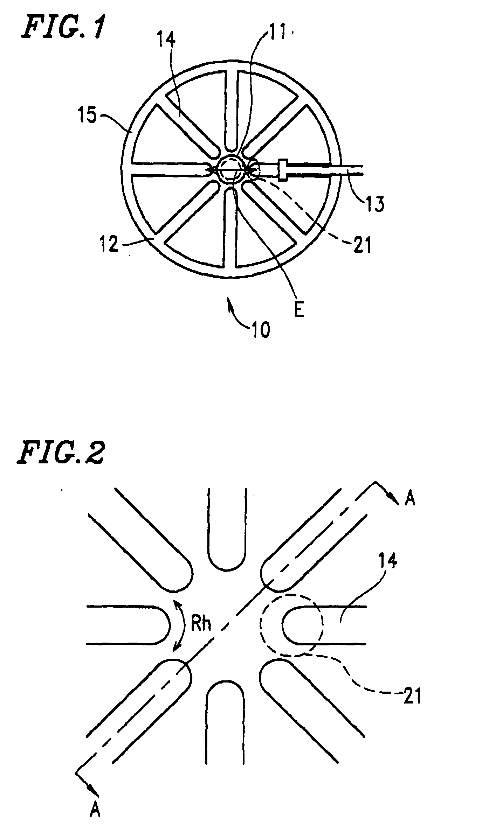

Figure **1** shows a structure of a high frequency energy supply apparatus **10** in a first example according to the present invention.

The high frequency energy supply apparatus **10** includes a vane type resonator **12** as a side resonator group.

The vane type resonator **12** includes a cylinder **15** and eight plate-like vanes **14** extending from an inner circumferential surface of the cylinder **15** toward the center of the cylinder **15**. The cylinder **15** and the Vanes **14** are formed of a conductive material. The cylinder **15** has an inner diameter of, for example, about 20 mm: and each vans **14** has a thickness of, for example, about 2.5 mm. The vane **14** is also referred to a "conductive projection".

Two neighboring vanes **14** and a gap therebetween form a side resonator. A plurality of such side resonators coupled substantially in a circular manner forms the vane type resonator **12**. The plurality of such side resonators need to be electrically connected to one another, but do not need to be physically integrated together. In the example shown in Figure **1**, the eight side resonators (side resonator group) are integrated together.

A high frequency energy propagating from a high frequency oscillator (not shown) is coupled to the vane type resonator **12** through a coupling antenna **13**. The coupling antenna **13** is electrically connected to one of the eight vanes **14** by caulking or welding. The vane type resonator **12** is designed so as to resonate at a frequency of the high frequency energy which is coupled thereto. By use of a resonating high frequency electric field **E** generated in a central portion of the vane type resonator **12**, a required amount of high frequency energy is supplied to a load **11** such as, for example, an electrodeless discharge lamp located in the central portion of the vane type resonator **12**. The inner diameter of a cylindrical space in which the load **11** is located is, for example, about 10 mm.

Figure **2** is an enlarged view of end portions **21** of the vane type resonator **12**. As shown in Figure **2**, the end portion **21** of each vane **14** which is closer to the center of the cylinder **15** is rounded. The end portions **21** are rounded by a rounding process.

By rounding the end portions **21** of the vanes **14**, concentration of a strong electric field in a part of the end portions **21** of the vanes **14** can be prevented. As a result, generation of abnormal discharge (e.g., corona discharge) in the vicinity of the end portions **21** of the vanes **14** is suppressed or prevented.

Corona discharge generally refers to the following phenomenon. In the case of a pair of flat electrodes, the electric field between the electrodes is uniform except for in the vicinity of end portions thereof. However, the electric field generated between a needle-type electrode and a flat electrode is significantly non-uniform. When the electrode is significantly non-uniform, ionization occurs in a strong electric field and does not occur in the remaining weaker electric field. As a result, local discharge (local breakdown) occurs. Such local discharge is referred to as the "corona discharge".

In the vane type resonator **12**, the strongest electric field is generated between the neighboring vanes **14**.

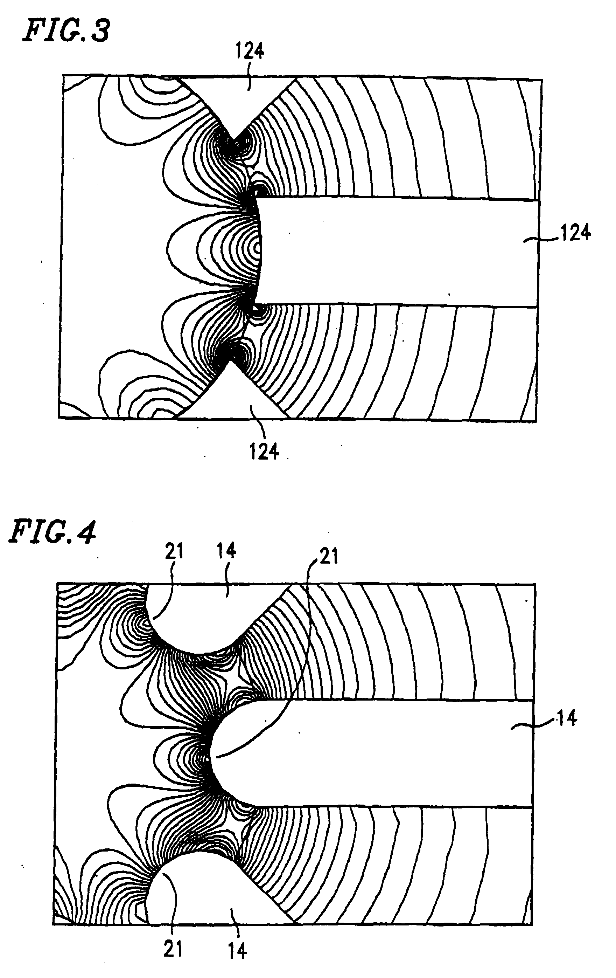

Figure **3** shows the distribution of an electric field generated in the ambient atmosphere around end portions of the vanes **124** of the conventional vane type resonator **122** described with reference to Figure **12**. The distribution shown in Figure **3** is obtained as a result of analysis performed using a finite element method. In Figure **3**, the curves show a contour of the electric field strength in the 2π/N mode.

In the conventional vane resonator **122**, the end portions of the vanes **124** have cornered portions. As illustrated in Figure **3**, the contour of the electric field strength is quite dense in the vicinity of the corners of the end portions of the vanes **124**. This occurs since the electric field concentrates on the vicinity of the corners of the end portions of the vanes **124**.

Figure **4** shows the distribution of an electric field generated in an ambient atmosphere around end portions **21** of the vanes **14** of the vans type resonator **12** in the first example according to the present invention. The distribution shown in Figure **4** is also obtained as a result of analysis performed using a finite element method. In Figure **4**, the curves show a contour of the electric field strength in the 2π/N mode.

In the vane resonator **12**, the end portions **21** of the vanes **14** are rounded as described above. As illustrated in Figure **4**, the contour of the electric field strength is more sparse in the vicinity of the end portions **21** of the vanes **14** as compared to those in Figure **3**. This occurs since the electric field is dispersed in the vicinity of the end portions **21** of the vanes **14**. Thus, the non-uniform distribution of the electric field is alleviated. As a result, generation of corona discharge is suppressed or even prevented.

It is not necessary to round the end portions **21** of all the vanes **14** of the vane type resonator **12**. Rounding of the end portion **21** of at least one vane **14** is included in the scope of the present invention. For example, the end portion **21** of the vane **14** coupled to the coupling antenna **13** (Figure **1**) can be rounded, or the end portions **21** of a plurality of vanes **14** located in the vicinity of the vane **14** coupled to the coupling antenna **13** (Figure **1**) can be rounded.

In the example shown in Figures **1** and **2**, the end portions **21** of the vanes **14** are rounded in a horizontal direction as indicated by arrow **Rh** in Figure **2**. The direction of rounding and parts to be rounded are not limited to this.

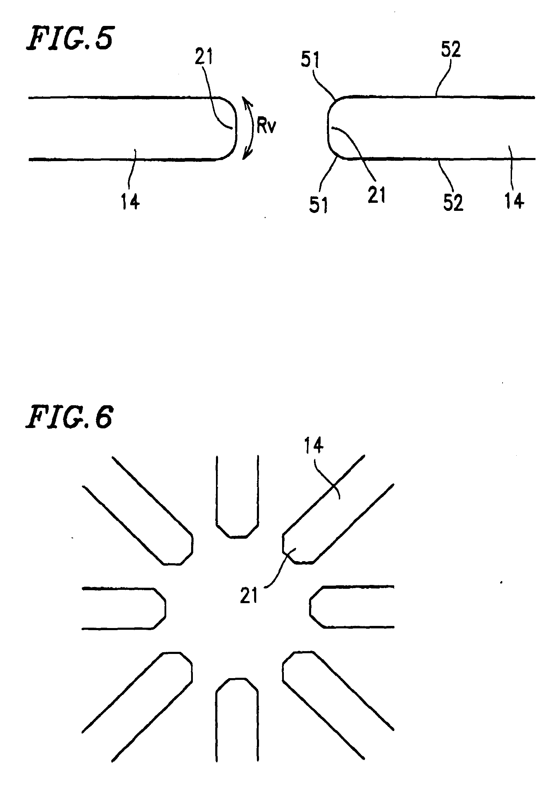

Figure **5** is a cross-sectional view of the vane **14** shown in Figure **2** taken along line **A-A** in Figure **2**. The end portion **21** of the vane **14** can be rounded in a vertical direction as indicated by arrow **Rv** in Figure **5**. Reference numeral **51** refers to parts of the end portion **21** which are rounded in the vertical direction. It is desirable to round an upper edge and a lower edge of the vane **14** of a portion which is not the end portion **21**, as indicated by reference numeral **52**. By rounding the edges in this manner, concentration of an electric field in the vicinity of the cornered portions of the vanes **14** is avoided. As a result, generation of corona discharge is suppressed or even prevented.

In the first example, the radius of curvature of the rounded part of the end portions **21** is equal to half of the maximum thickness of the vane **14**. The radius of curvature is not limited to this. Notably, as the radius of curvature is smaller, the electric field concentrates more densely and corona discharge occurs more easily. A required radius of curvature depends on various conditions such as, for example, the strength of the high frequency electric field applied or distance between two neighboring vanes **14**.

An appropriate radius of curvature is desirably determined based on experimental results in consideration of the conditions such as the size of the vane type resonator used or the magnitude of the high frequency power. The present inventors performed experiments under the conditions of: thickness of the vane **14** of about 1 mm, distance between neighboring vanes **14** of about 5 mm, and input power of about 30 W. Under such conditions, sufficiently effective results were obtained when the radius of curvature of rounding was about 0.2 mm or more.

Instead of rounding the end portions **21** of the vanes **14**, the end portions **21** of the vanes **14** can be chamfered as shown in Figure **6** in order to obtain a similar effect. Alternatively, the structure in which one edge is rounded and another edge is chamfered is usable. By rounding or chamfering the end portion **21** of the vane **14** as described above, concentration of an electric field in the vicinity of a corner of the end portion **21** is avoided. As a result, generation of corona discharge is suppressed or even prevented.

### (Example 2)

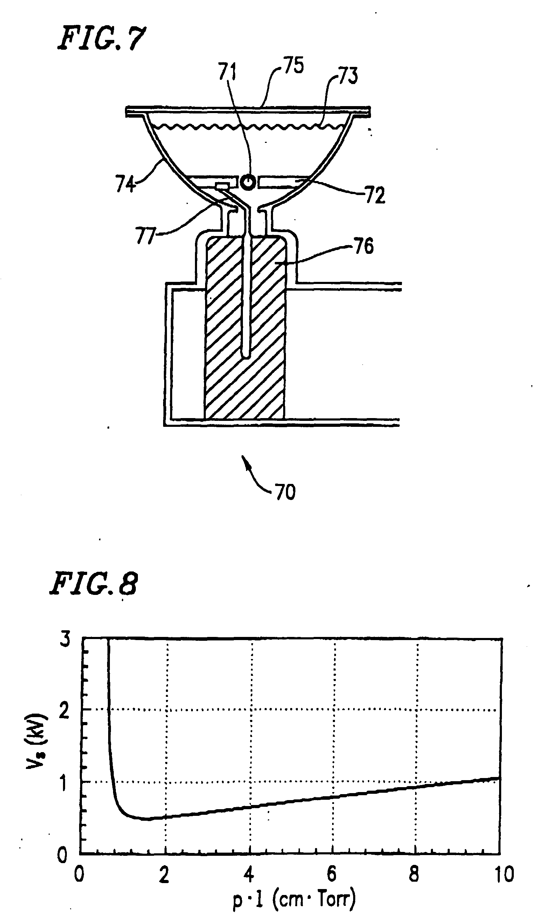

Figure **7** shows a structure of a high frequency energy supply apparatus **70** in a second example according to the present invention.

The high frequency energy supply apparatus **70** includes a side resonator group **72**. The side resonator group **72** has the same structure as that of, for example, the conventional vane type resonator **122** (Figure **12**).

An electrodeless lamp **71** is supported by a support rod (not shown) in a central portion of the side resonator group **72**. A high frequency energy propagating from a high frequency oscillator (not shown) such as, for example, a magnetron is coupled to the side resonator group **72** by a coupling antenna **77**. The coupling antenna **77** is secured at an appropriate position by a coupling antenna support **76** formed of a dielectric material.

By a resonating high frequency electromagnetic field generated in the central portion of the side resonator group **72**, the electrodeless lamp **71** causes discharge and emits light. The light radiating by the discharge is reflected by a reflecting mirror **74** formed of a conductive material and removed outside via a metal mesh **73** and an air-tight lid **75** formed of a transparent material. The reflecting mirror **74** and the metal mesh **73** act as a measure for preventing high frequency leaks.

The air-tight lid **75** is formed of a heat-resistive light-transmissive material such as, for example, borosilicate glass. The air-tight lid **75**, the reflecting mirror **74** and the coupling antenna support **76** form an air-tight structure. By reducing the pressure inside the air-tight structure to a vacuum state or by raising the pressure, the pressure of the ambient atmosphere around an end portion of a conductive projection of the side resonator group **72** where the strongest electric field is generated is correspondingly reduced to a vacuum state or raised. Thus, generation of abnormal discharge (e.g., corona discharge) in the vicinity of the end portion of the conductive projection is suppressed or even prevented.

With reference to Figure **8**, the reason why generation of abnormal discharge can be suppressed or prevented by reducing the pressure of the ambient atmosphere around the end portion of the conductive projection of the side resonator group **72** to a vacuum state or raising the pressure will be described.

Figure **8** is a graph illustrating the relationship among the breakdown voltage at which spark discharge occurs, pressure of ambient atmosphere, and inter-electrode distance, which is obtained when a DC pulse Voltage is applied between two electrodes located parallel to each other.

In Figure **8**, the horizontal axis represents the product of the pressure p of the ambient atmosphere and the inter-electrode distance l. The vertical axis represents the breakdown voltage Vs at which spark discharge occurs.

As the product of the pressure p of the ambient atmosphere and the inter-electrode distance l decreases, the breakdown voltage Vs gradually decreases. When the product p·l is reduced to smaller than about 1, the breakdown voltage Vs rapidly increases. This shows that corona discharge is unlikely to occur by reducing the pressure of the ambient atmosphere to a vacuum state so that the product p·l is sufficiently smaller than 1 (one) (cm·Torr). In the range where product p·l is sufficiently larger than 1 (cm·Torr), as the product p·l increases, the breakdown voltage Vs gradually increases. This shows that corona discharge is unlikely to occur by raising the pressure of the ambient atmosphere so that the product p·l is sufficiently larger than 1 (cm·Torr).

The length of the gap between the end portions of the vanes, where the electric field is strongest in a vane type resonator, is generally about 0.1 to about 1 cm. Accordingly, the pressure of the ambient atmosphere around the end portions can be reduced to a vacuum state by reducing the pressure inside the air-tight structure (Figure **7**) to a sufficiently small value. For example, when air is evacuated by a rotary pump, the pressure inside the air-tight structure is reduced to about 10⁻² to about 10⁻³ Torr. This range is sufficiently small to suppress corona discharge.

The atmospheric pressure is about 760 Torr. When the pressure p of the ambient atmosphere is equal to the atmospheric pressure, the product p·l is clearly larger than 1. The breakdown voltage Vs can be raised sufficiently by increasing the pressure p of the ambient atmosphere so as to be larger than the atmospheric pressure. In this manner, corona discharge is suppressed.

As described above, by setting the pressure of the ambient atmosphere around the end portion of at least one of the plurality of conductive projections of the side resonator group **72** at a pressure at which abnormal pressure is unlikely to occur, generation of abnormal discharge can be suppressed or prevented.

In the above description, the pressure in the entirety of the vane type resonator, which is one type of side resonator group, is reduced to a vacuum state or raised. A similar pressure can be provided by reducing to a vacuum state or raising the pressure of a portion of the side resonator group where the electric field is strongest (typically, in the vicinity of the gap between the end portions of the conductive projections).

### (Example 3)

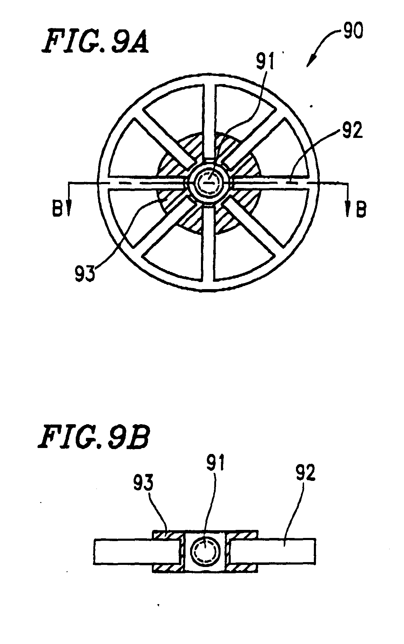

Figure **9A** shows a structure of a high frequency energy supply apparatus **90** in a third example according to the present invention.

The high frequency energy supply apparatus **90** includes a vane type resonator **92** as a side resonator group.

An electrodeless discharge lamp **91** is provided in a central portion of the vane type resonator **92**. A high frequency energy propagating from a high frequency oscillator (not shown) is coupled to the vane type resonator **92** by a coupling antenna (not shown). The vane type resonator **92** is designed so as to resonate at a frequency of the high frequency energy which is coupled thereto. As a result, a resonating high frequency electric field is generated in the central portion of the vane type resonator **92**. By use of the resonating high frequency electric field generated in the central portion of the vane type resonator **92**, energy required for high frequency discharge is provided to the electrodeless discharge lamp **91**.

As shown in Figure **9A**, end portions of vanes of the vane type resonator **92** are covered by a dielectric member **93**. The electric field is strongest in the vicinity of the end portions. Thus, the breakdown voltage between the end portions of the vanes is increased, resulting in suppression of unnecessary corona discharge.

Figure **9B** is a cross-sectional view of the, vane type resonator **90** in Figure **9A** taken along line **B-B** in Figure **9A**. As shown in Figure **9B**, the dielectric member **93** desirably covers top and bottom surfaces of the vanes as well as opposing faces. Covering the top and bottom surfaces of the vanes is effective for preventing corona discharge from being generated at upper or lower edges of the vanes.

Table 1 shows the dielectric breakdown strength of the atmosphere and typical dielectric materials having a superior insulation.

**Table 1**

| Material | | Dielectric breakdown strength (kV/mm) |
|---|---|---|
| Atmosphere | | 4.5 to 5 |
| Inorganic | Muscovite | 90 to 120 |
| | Quartz glass | 25 to 40 |
| | Borosilicate glass | 20 to 35 |
| Organic | Polystyrol | 18 to 24 |
| | Polyethylene | 18 to 24 |
| | Ethylene tetrafluoride polymer | 18 |

As can be appreciated from Table 1, by covering the end portions of the vanes by the dielectric member **93** formed of a material having a dielectric breakdown strength which is higher than that of the atmosphere, the voltage at which dielectric breakdown occurs can be increased to 3 to 24 times the voltage of the atmosphere. Thus, generation of unnecessary corona discharge in the side resonator group can be prevented.

The dielectric member **93** is not limited to a solid. The dielectric member **93** can be a liquid or gas as long as it fulfills the condition of having a dielectric breakdown strength which is higher than that of the atmosphere.

In consideration of applying the vane type resonator **90** in a high frequency electrodeless discharge lamp device, it is preferable to select a material having a sufficiently high positive transmittance as the material of the dielectric member **93**. By such selection, an optical loss can be reduced so as to increase the light utilization efficacy. Accordingly, quartz glass or borosilicate is preferable as the material of the dielectric member **93**. The dielectric member **93** also needs to have a sufficiently small dielectric loss.

In the third example, the dielectric member **93** covers the end portions of the vanes and fills the gap between the end portions. The arrangement of the dielectric member **93** is not limited to this. For example, the dielectric member **93** may cover the entirety of the conductive projections (i.e., the vanes) of the vane type resonator **92**.

Alternatively, the dielectric member **93** may cover only the surfaces of the end portions of the vanes. Such an arrangement prevents electrons from being released from the surfaces of the end portions of the vanes. As a result, generation of corona discharge is suppressed.

In the first through third examples, a vane type resonator is used as the side resonator group. The present invention is not limited to such a structure. A hole-slot type or other resonator can be used as the side resonator group.

In the first through third examples, the load to which the high frequency energy is supplied is not limited to a discharge lamp. The present invention is not limited to this. For example, the load can be an electrodeless discharge generator or discharge gas. The application of the present invention is not limited to a discharge lamp or a high frequency electrodeless discharge lamp. A high frequency energy supply apparatus according to the present invention can be effectively used in an apparatus, which uses high frequency discharge, such as, for example, a plasma CVD device, a plasma torch device, or a gas discharge laser. In such apparatuses, the high frequency energy supply apparatus according to the present invention is usable for supplying a concentrated and non-deflected resonating high frequency energy in order to form stable discharge plasma having a relatively small diameter.

A high frequency energy supply apparatus according to the present invention can also be effectively used for supplying a concentrated, non-deflected and uniform resonating high frequency energy in order to heat, melt or vaporize a target (load) or cause the target to emit light, wherein the target has a relatively small diameter and is located in a central portion of the high frequency energy supply apparatus.

### (Example 4)

When a side resonator group is used in a high frequency energy supply apparatus for supplying a high frequency energy to an electrodeless discharge generator (for example, electrodeless discharge lamp), the high frequency energy supplied has no place to be propagated before the electrodeless discharge generator starts discharge. This is one cause of abnormal discharge.

The electrodeless discharge lamp does not exhibit conductivity before starting discharge, but exhibits conductivity due to inner plasma after discharge starts. Accordingly, the impedance viewed from outside the resonator in the high frequency energy supply apparatus is significantly different before discharge from after discharge. In the case where the resonator or the apparatus is designed so as to have a size matching the impedance while discharge is maintained, the size is not matched with the impedance before discharge. Thus, there occurs problems in that the resonating electric field in the central portion of the resonator is weak and a start of the electrodeless discharge lamp is not guaranteed.

By providing an assisting section for assisting the electrodeless discharge generator in guaranteeing the start of discharge, the probability at which the high frequency energy causes abnormal discharge can be reduced. As a result, generation of abnormal discharge is suppressed.

In fourth and fifth examples according to the present invention, specific examples of the assisting section will be described.

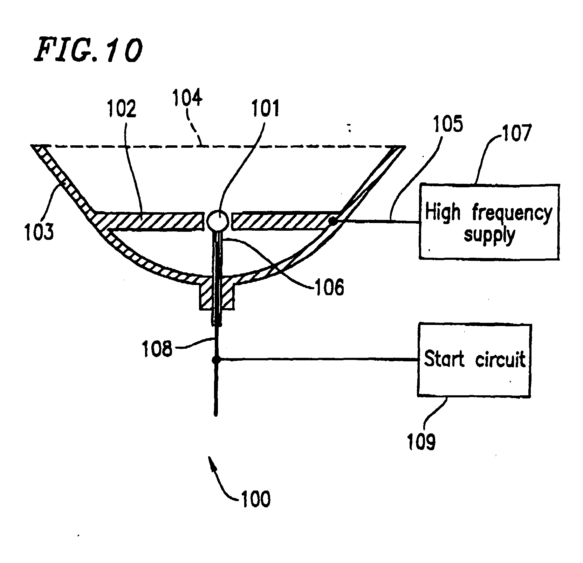

Figure **10** is a vertical cross-sectional view of a high frequency electrodeless discharge lamp device **100** in the fourth example. The high frequency electrodeless discharge lamp device **100** includes a side resonator group **102** as a high frequency energy supply apparatus for supplying a high frequency energy to an electrodeless discharge lamp **101**.

The side resonator group **102** has the same structure as, for example, that of the conventional vane type resonator **122** shown in Figure **12**. Alternatively, the aide resonator group **102** can have any of the side resonator groups or vane type resonators described in the first through third examples.

The electrodeless discharge lamp **101** is formed of a light-transmissive heat-resistive material such as, for example, quartz glass. The electrodeless discharge lamp **101** accommodates noble gas and a light emitting material such as, for example, metal halide sealed therein. The electrodeless discharge lamp **101** is supported by a support rod **106** in a central portion of the side resonator group **102**. The support rod **106** is also formed of quartz glass or the like.

A circular portion **103** of the side resonator group **102** has a light reflecting surface on an inner surface thereof. The circular portion **103** also acts as a reflecting mirror (also referred to as the "reflecting mirror **103**"). The circular portion **103** and a metal mesh **104** act as a measure for preventing high frequency leaks. The circular portion **103** is formed of a conductive material, and the metal mesh **104** is formed of a light-transmissive conductive material. Light radiating by discharge of a light emitting material sealed in the electrodeless discharge lamp **101** is reflected by the reflecting mirror **103** and removed outside via the metal mesh **104**.

Thus, the electrodeless discharge lamp **101** acts as an electrodeless discharge generator.

The support rod **106** is hollow. Located inside the support rod **106** is a start assisting electrode **108** formed of a metal conductive material. The start assisting electrode **108** is electrically connected to a lead from a start circuit **109**. A high voltage pulse generated by the start circuit **109** is applied to the start assisting electrode **108** through the lead.

The support rod **106** which is dielectric is provided between the start assisting electrode **108** and the reflecting mirror **103**. Due to such a structure, the start assisting electrode **108** and the reflecting mirror **103** are electrically insulated from each other.

A high frequency energy generated from a high frequency supply **107** as a high frequency oscillator is propagated through a high frequency propagation section **105** such as a coaxial line, and then coupled to the side resonator group **102**. As a result, a resonating electric field is generated in the central portion of the side resonator group **102** in which the electrodeless discharge lamp **101** is located.

However, when especially the electrodeless discharge lamp **101** is sufficiently cooled, the electron density of the electrodeless discharge lamp **101** may be excessively low to start discharge by dielectric breakdown.

By applying a high voltage pulse to the start assisting electrode **108** from the start circuit **109**, small discharge is caused inside the electrodeless discharge lamp **101**. In this manner, electrodeless discharge by a high frequency energy is started with certainty. In an experiment performed using a high voltage pulse transformer used for starting a commercially available high luminance discharge lamp, electrodeless discharge by a high frequency energy is started with certainty by applying a voltage of as high as about 20 kV to the start assisting electrode **108**.

After the electrodeless discharge by the high frequency energy is started, it is not necessary to apply a high voltage pulse to the start assisting electrode **108**. Accordingly, it is desirable to stop the application of the high voltage pulse immediately after the electrodeless discharge is started.

The start assisting electrode **108** should not be too close to the electrodeless discharge lamp **101**. When this occurs, the electrodeless discharge lamp **101** is heated by the resonating electric field in the central portion of the side resonator group **102**, resulting in a loss of high frequency energy. When the power of the high frequency energy is relatively large, such heated electrodeless discharge lamp **101** may undesirably melt and break the start assisting electrode **108**.

In the experiment performed by the present inventors, even when an end of the start assisting electrode **108** and a tube wall of the electrodeless discharge lamp **101** are away from each other by 10 mm or more, electrodeless discharge by the high frequency energy was started sufficiently certainly. An appropriate distance between the start assisting electrode **108** and the electrodeless discharge lamp **101** significantly varies in accordance with the power of the high frequency energy supplied and the voltage of the high voltage pulse applied for starting, and cannot be a constant value. However, when the end of the start assisting electrode **108**, which is a conductor, is too close to the central portion of the side resonator group **102**, an electric current caused by the resonating electric field flows to the start assisting electrode **108**, causing a power loss. From this point of view, the end of the start assisting electrode **108** is desirably away from the central portion of the side resonator group **102** by a maximum possible distance. Accordingly, an appropriate distance between the start assisting electrode **108** and the tube wall of the electrodeless discharge lamp **101** is desirably determined based on experimental results so as to be suitable to the specifications of the apparatus in which the start assisting electrode is used.

Due to such a structure, the electrodeless discharge lamp **101** can start high frequency discharge with certainty and then maintain the discharge by the supply of the high frequency energy from the side resonator group **102**. In the high frequency electrodeless discharge lamp device **100** having the above-described structure, a start of the high frequency discharge in the electrodeless discharge lamp is guaranteed.

### (Example 5)

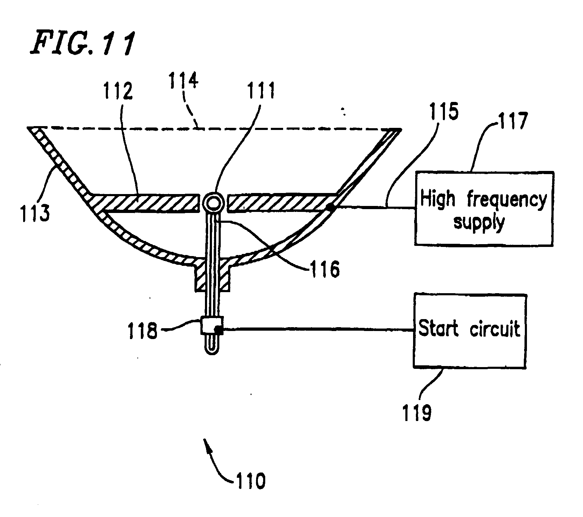

Figure **11** is a vertical cross-sectional view of a high frequency electrodeless discharge lamp device **110** in the fifth example. The high frequency electrodeless discharge lamp device **110** includes a side resonator group **112** as a high frequency energy supply apparatus for supplying a high frequency energy to an electrodeless discharge lamp **111**.

The side resonator group **112** has the same structure as, for example, that of the conventional vane type resonator **122** shown in Figure **12**. Alternatively, the side resonator group **112** can have any of the side resonator groups or vane type resonators described in the first through third examples.

The electrodeless discharge lamp **111** is formed of a light-transmissive heat-resistive material such as, for example, quartz glass. The electrodeless discharge lamp **111** accommodates noble gas and a light emitting material such as, for example, metal halide sealed therein. The electrodeless discharge lamp **111** is supported by a support rod **116** in a central portion of the side resonator group **112**. The support rod **116** is also formed of quartz glass or the like.

As in the fourth example, a circular portion **113** of the side resonator group **112** has a light reflecting surface on an inner surface thereof. The circular portion **113** also acts as a reflecting mirror (also referred to as the "reflecting mirror **113**"). The circular portion **113** and a metal mesh **114** act as a measure for preventing high frequency leaks. The circular portion **113** is formed of a conductive material, and the metal mesh **114** is formed of a light-transmissive conductive material. Light radiating by discharge of a light emitting material sealed in the electrodeless discharge lamp **111** is reflected by the reflecting mirror **113** and removed outside via the metal mesh **114**.

Thus, the electrodeless discharge lamp **111** acts as an electrodeless discharge generator.

The support rod **116** is hollow. Sealed inside the support rod **116** is noble gas such as, for example, argon. The support rod **116** has a portion extending outside the circular portion **113**, and a high voltage application electrode **118** is attached to the portion. The high voltage application electrode **118** is electrically connected to a lead from a start circuit **119**. A high voltage pulse generated by the start circuit **119** is applied to the start assisting electrode **118** through the lead.

The high voltage application electrode **118** and the reflecting mirror **113** are away from each other by a sufficient distance to prevent dielectric breakdown of the ambient atmosphere. Thus, the high voltage application electrode **118** and the reflecting mirror **113** are electrically insulated from each other.

A high frequency energy generated from a high frequency supply **117** as a high frequency oscillator is propagated through a high frequency propagation section **115** such as a coaxial line, and then coupled to the side resonator group **112**. As a result, a resonating electric field is generated in the central portion of the side resonator group **112** in which the electrodeless discharge lamp **111** is located.

First, by applying a high voltage pulse to the high voltage application electrode **118** from the start circuit **119**, noble gas discharge is caused inside the support rod **116**. Thus, plasma of the noble gas discharge acts as a conductor. Then, a high voltage pulse is propagated through the plasma of the noble gas discharge, and thus starting discharge is caused in the electrodeless discharge lamp **111**. In this manner, electrodeless discharge by a high frequency energy is started with certainty.

After the electrodeless discharge by the high frequency energy is started, it is not necessary to apply a high voltage pulse to the high voltage application electrode **118**. Accordingly, it is desirable to stop the application of the high voltage pulse immediately after the electrodeless discharge is started.

After the application of the high voltage pulse is stopped, the noble gas discharge in the support rod **116** disappears. Accordingly, the high frequency energy which should be supplied to the electrodeless discharge lamp **111** is prevented from being consumed by the noble gas in the support rod **116**.

Due to such a structure, the electrodeless discharge lamp **111** can start high frequency discharge with certainty and then maintain the discharge by the supply of the high frequency energy from the side resonator group **112**. In the high frequency electrodeless discharge lamp device **110** having the above-described structure, a start of the high frequency discharge in the electrodeless discharge lamp **111** is guaranteed.

As described above, in the fourth and fifth examples, the high frequency discharge in the electrodeless discharge lamp can be started with certainty, thus suppressing generation of abnormal discharge.

As described above, a high frequency energy supply apparatus according to the present invention suppresses generation of abnormal discharge (e.g., corona discharge) in the vicinity of the end portion of at least one of a plurality of conductive projections. Accordingly, energy loss caused by the corona discharge in the atmosphere is reduced. The high frequency energy supply apparatus according to the present invention also efficiently supplies an energy required for discharge, heating, light emission, melting or vaporization. Glass of the electrodeless discharge lamp, high frequency shield or resonator itself are protected from being broken by melting.

A high frequency electrodeless discharge apparatus according to the present invention has a remarkable effect of starting an electrodeless discharge generator with certainty.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

## Claims

1. A high frequency energy supply apparatus, comprising:
a side resonator having a plurality of conductive projections; and
suppression means for suppressing generation of abnormal discharge in the vicinity of at least one of end portions of the plurality of conductive projections.

2. A high frequency energy supply apparatus according to claim 1, wherein the at least one of the end portions of the plurality of conductive projections is rounded or chamfered.

3. A high frequency energy supply apparatus according to claim 1, wherein a pressure in an ambient atmosphere around the at least one of the end portions of the plurality of conductive projections is set to be a pressure which is less likely to cause abnormal discharge than atmospheric pressure.

4. A high frequency energy supply apparatus according to claim 1, further comprising a dielectric member for covering the at least one of the end portions of the plurality of conductive projections, wherein the dielectric member has a dielectric breakdown strength higher than the dielectric breakdown strength of atmosphere.

5. A high frequency energy supply apparatus according to claim 1, wherein the side resonator is a vane type resonator.

6. A high frequency electrodeless discharge apparatus, comprising:
an electrodeless discharge generation section; and
a high frequency energy supply apparatus for supplying the electrodeless discharge generation section with a high frequency energy,
wherein the high frequency energy supply apparatus includes:
a side resonator having a plurality of conductive projections; and
suppression means for suppressing generation of abnormal discharge in the vicinity of at least one of end portions of the plurality of conductive projections.

7. A high frequency electrodeless discharge apparatus according to claim 6, wherein the suppression means includes assisting means for assisting the electrodeless discharge generation section in starting discharge with certainty.

8. A high frequency electrodeless discharge apparatus, comprising:
an electrodeless discharge generation section;
a high frequency energy supply apparatus for supplying the electrodeless discharge generation section with a high frequency energy; and
assisting means for assisting the electrodeless discharge generation section in starting discharge with certainty.

9. A high frequency electrodeless discharge apparatus according to claim 8, wherein the assisting means includes:
a support member for supporting the electrodeless discharge generation section and accommodating a start assisting electrode; and
a start circuit for applying a high voltage pulse to the start assisting electrode.

10. A high frequency electrodeless discharge apparatus according to claim 8, wherein the assisting means includes:
a support member for supporting the electrodeless discharge generation section and sealing noble gas;
a high voltage application electrode connected to the support member; and
a start circuit for applying a high voltage pulse to the high voltage application electrode to cause discharge of the noble gas.
